# EUROPÄISCHE PATENTSCHRIFT

(11) **EP 1 897 430 B1**
(45) Veröffentlichungstag und Bekanntmachung des Hinweises auf die Patenterteilung: **10.06.2015**
(21) Anmeldenummer: 07110861.7
(22) Anmeldetag: 22.06.2007
(51) Int. Cl.: A01D 41/12, A01F 12/40

(54) **Häcksel- und Verteilvorrichtung**
Shredder and distribution device
Dispositif de hachage et de répartition

(30) Priorität: 07.09.2006 DE 102006042553
(43) Veröffentlichungstag der Anmeldung: 12.03.2008
(73) Patentinhaber: CLAAS Selbstfahrende Erntemaschinen GmbH, 33428 Harsewinkel (DE)
(72) Erfinder: Terörde, Stefan, 48231, Warendorf (DE); Niermann, Martin, 33428, Harsewinkel (DE); Brinkmann, Jörn, 33428, Harsewinkel (DE); Barrelmeyer, Thomas, Dr., 33790 Halle/Westf. (DE); Clostermeyer, Gerhard, 33334, Gütersloh (DE)

(56) Entgegenhaltungen:
- EP-A- 0 331 784
- EP-A- 1 514 466
- DE-A1- 4 431 802
- US-A- 5 021 030

## Beschreibung

Die Erfindung betrifft eine Häcksel- und Verteilvorrichtung, insbesondere Anbauhäcksler für Mähdrescher nach dem Oberbegriff des Anspruchs 1,

Aus der EP 1 208 737 ist eine Verteileinrichtung für einen Häcksler offenbart. Die Verteileinrichtung ist am Heck des Mähdreschers unmittelbar hinter dem Häcksler angeordnet. Die Verteileinrichtung besteht aus zwei getrennt verschwenkbaren Hauben, die dem Häcksler nachgeschaltet sind. Die Hauben sind einzeln elektrohydraulisch verstellbar, um die Breite des Strohauswurfs anzupassen.

Weitere Häcksel- und Verteileinrichtungen sind z.B. aus der US 5 021 030 oder der EP 0 331 784 bekannt.

Nachteilig bei den bekannten Verteileinrichtungen ist, dass das verteilte Erntegut aufgrund des Luftwiderstandes nicht weit genug fliegt und dadurch bei sehr breiten Schneidwerksbreiten das Erntegut nicht auf eine der Schneidwerksbreite des Vorsatzgerätes entsprechenden Verteilbreite verteilt werden kann.

Der vorliegenden Erfindung liegt daher die Aufgabe zugrunde, die Nachteile des Standes der Technik zu vermeiden und insbesondere eine Häcksel- und Vetleilvorrichtung anzugeben, mit der eine Verteilung des Erntegut über die gesamte Schneidwerksbreite auch bei sehr breiten Vorsatzgeräten möglich ist.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die zumindest eine Verteileinrichtung dem wenigstens einen Häckselorgan in der Weise zugeordnet ist, dass der aus dem Häckselorgan austretende Erntegutstrom vor dem Eintritt in die zumindest eine Verteileinrichtung eine durch angetriebene Leitelemente bewirkte quer zur Längsachse des Häckselorgans gerichtete Bewegung erfährt, kann die Erntegutmenge auch bei Vorsatzgeräten mit großer Schnittbreite über die gesamte Schnittbreite des Schneidwerks verteilt werden, da auf dieses Weise die Verteileinrichtungen einen größeren Abstand zueinander aufweisen können, was letztlich wegen der abnehmenden Überdeckung der Einzelverteilbreiten eine größere Gesamtverteilbreite ermöglicht.

Eine vorteilhafte, konstruktiv einfache und daher kostengünstige Ausführung einer erfindutigsgemäßen Häcksel- und Verteileinnchtung ergibt sich, wenn die quer zur Längsachse des Häckselorgans gerichtete Bewegung des Erntegutstromes zusätzlich durch stationäre Leitelemente bewirkt wird.

Die angetriebenen Leitelemente sind in vorteilhafter Ausgestaltung der Erfindung Fliehkraftförderer oder Elevatorförderer, so dass das Erntegut über größere Distanzen gefördert werden kann.

In vorteilhafter Weiterbildung der Erfindung sind die statischen Leitelemente als Leitschienen ausgeführt, so dass sich eine einfache Konstruktion der erfindungsgemäßen Häcksel- und -Verteileinrichtung ergibt.

Dadurch, dass die den stationären und/oder angetriebenen Leiteiementen nachgeordneten Verteileinrichtungen zwischen sich einen horizontalen Abstand ausbilden und wobei der horizontale Abstand zumindest in Abhängigkeit der Schnittbreite einstellbar ist, wird das Erntegut jeweils über die aktuelle Schnittbreite auf dem Feld verteilt, Durch die Zunahme des Abstands der Verteifeinnchtungen zueinander nimmt die abnehmenden Überdeckung der Einzeiverteilbreiteti der Verteileinrichtungen ab, woraus eine größere Gesamtverteilbreite resultiert

In vorteilhafter Ausgestaltung der Erfindung sind die Verteileinrichtungen als Radialverteiler ausgeführt und die Anpassung der Teilstreubreite des Radialverteilers an die Schnittbreite ist durch Drehzahländerung der Radialverteiler einstellbar, so dass die Einzelverteilbreiten der Verteileinrichtungen veränderbar sind.

Vorteilhafterweise ist die Verteileinrichtung in der Arbeitsstellung in Fahrtrichtung des Mähdreschers gesehen neben dem Häckselorgan angeordnet, so dass der Abstand der Verteileinrichtung zur äußeren Kante der Streubreite so klein wie möglich ist.

Eine einfache und daher kostengünstige Ausführung der Erfindung ergibt sich, wenn die Verteileinrichtung an der Leitschiene angeordnet ist, wobei die Leitschiene verschwenkbar am Mähdrescher angeordnet ist.

Eine kostengünstige Ausführung der Erfindung ergibt sich, wenn das Verteilorgan als Verteithaube ausgeführt wird, da diese keine weiteren Antriebe zur Beschleunigung des Erntegutes aufweist.

In vorteilhafter Weiterbildung der Erfindung ist die Lage des Verteilorgans in Abhängigkeit von der Hangneigung verstellbar, um die Streubreite anzupassen.

Vorteilhafterweise weist der Mähdrescher ein Schneidwerk mit einer Schnittbreite auf, wobei die Lage des Verteilorgans in Abhängigkeit von der Schnittbreite verstellbar ist, damit die Streubreite des Verteilorgans an die Schnittbreite des Schneidwerks anpassbar ist.

Dadurch, dass der aus dem Häckselorgan austretende Gutstrom von den angetriebenen Leitelementen und den diesen nachgeordneten Verteileinrichtungen beschleunigt wird, können größere Wurfweiten des Gutstroms und damit größere Verteilbreiten erzielt werden.

Weitere vorteilhafte Ausgestaltungen sind Gegenstand weiterer Unteransprüche und werden nachfolgend an Hand des in mehreren Figuren dargestellten Ausführungsbeispiels näher erläutert.

### Es zeigen:

- Fig.1: eine schematische Seitenansicht eines Mähdreschers bei der Erntefahrt.
- Fig. 2: eine Draufsicht des Mähdreschers nach Fig. 1 bei der Erntef-ahrt,
- Fig. 3: eine Rückansicht des Mähdreschers nach Fig. 1,
- Fig.4: eine Draufsicht einer weiteren, erfindungsgemäßen Häcksel- und Verteileinrichtung.

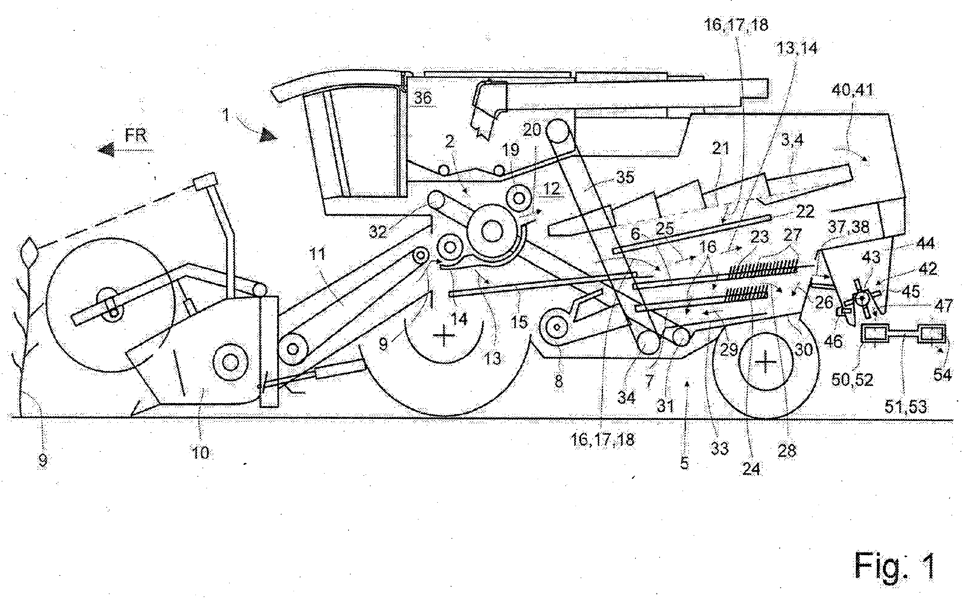

Fig.1 zeigt die Seitenansicht einer als Mähdrescher 1 ausgeführten Erntemaschine mit einem an sich bekannten und daher hier nicht näher beschriebenen Dreschwerk 2 und einem diesem nachgeordneten Hordenschutiter 3 als Abscheideorgan 4. Unterhalb des Hordenschüttlers 3 befindet sich eine Reinigungseinrichtung 5, bestehend aus zwei übereinander angeordneten Sieben 6, 7 und einem Reinigungsgebläse 8. Die Erfindung ist aber ausdrücklich nicht auf derartig ausgeführte Mähdreschertypen beschränkt, sondern bezieht sich beispielsweise auch auf Mähdrescher mit Rotoren als Abscheideorganen.
Im vorderen Bereich ist an dem Mähdrescher 1 ein Schneidwerk 10 angeordnet, mit dem das Erntegut 9 geschnitten und aufgenommen wird. Das Schneidwerk 10 führt das Erntegut 9 einem Schrägförderer 11 zu, der frontseitig am Mähdrescher 1 angeordnet ist Der Schrägförderer 4 übergibt das Erntegut 9 an das im Maschinengehäuse 12 angeordnete Dreschwerk 2. Das Dreschwerk 2 bearbeitet das Erntegut 9 intensiv, so dass die Körner aus den Früchten des Ernteguts 9 herausgelöst werden. Ein überwiegenden aus Körnern bestehendes Korn-Spreu-Gemisch 13 wird an dem Dresch- und Abscheidekorb 14 des Dreschwerks 2 abgeschieden und gelangt über einen Vorbereitungsboden 15 zu der Reinigungseinrichtung 5, um die Körner 16 von den Nichtkornbestandteilen, das heißt von Halm- 17 und Spreuteilen 18 zu trennen.
Im rückwärtigen Bereich ist dem Dreschwerk 2 eine rotierende Wendetrommel 19 zugeordnet, die den aus dem Dreschwerk 2 austretenden, im wesentlichen aus ausgedroschenen Halmen bestehenden Gutstrom 20 annimmt und dem Hordenschüttler 3 zuführt, die den Gutstrom 20 in den rückwärtigen Bereich des Mähdreschers 1 fördert.

Dabei werden die noch im Gutstrom 20 befindlichen Körner 16 sowie eventuell Kurzstroh 17 und Spreu 18 abgetrennt, indem sie durch den mit Sieböffnungen 21 versehenen Hordenschüttler 3 hindurch auf einen Rücklaufboden 22 fallen. Der Rücklaufboden 22 transportiert Körner 16, Kurzstroh 17 und Spreu 18 zum Vorbereitungsboden 15.
Die Körner 16, das Kurzstroh 17 und die Spreu 18 gelangen schließlich ebenfalls über den Vorbereitungsboden 15 in die Reinigungseinrichtung 5, in welcher die Körner 16 vom Kurzstroh 17 und von der Spreu 18 getrennt werden.
Dies erfolgt in der Weise, dass durch die Sieböffnungen 23, 24 im Obersieb 6 und im Untersieb 7 mittels des Gebläses 8 ein Luftstrom hindurchgefördert wird, welcher das über die Siebe 6, 7 in den hinteren Bereich des Mähdreschers 1 geführte Erntegut 25 auflockert und für das Heraustrennen der spezifisch leichteren Spreu- und Kurzstrohanteile 17, 18 sorgt, während die schweren Erntegutkörner 16 durch die Sieböffnungen 23, 24 fallen.
Ein Siebdurchgang 26, der im Überkehrbereich 27 durch das Obersieb 6 hindurchfällt und ein Siebüberlauf 28 am Ende des Untersiebs 7, enthält in der Regel schwerere Teilchen, d. h. unausgedroschene Ähren, Der SieMurchgans 26 zusammen mit dem Siebüberlauf 28 wird nachfolgend als sogenannte Überkehrerntegutmenge 29 bezeichnet. Die Überkehrerntegutmenge 29 fällt auf einen schräg verlaufenden Auffangboden 30 unterhalb der Reinigungseinrichtung 5 und gleitet in eine Ährenförderschnecke 31. Die Ährenförderschnecke 31 fördert die Überkehrerntegutmenge 29 in einen Ährenelevator 32, der sie erneut dem Dreschwerk 2 zuführt.
Die Körner 16, welche durch beide Siebe 6, 7 der Reinigungsvorrichtung 5 gelangt sind, fallen auf einen weiteren schräg verlaufenden Auffang- und Führungsboden 33 und gleiten in eine Kornförderschnecke 34, die die Körner 16 einem Kornelevator 35 zuführt. Der Kornelevator 35 fördert die Körner 16 in den Korntank 36,
Das Stroh 40 sowie ein bestimmter Prozentsatz an Verlustkömern 41 wandern über den Hordenschüttler 3 zum hinteren Ende des Mähdreschers 1 und fallen am Ende des Hordenschüttlers 3 in einen Strohhäcksler 42.
Der Strohhäcksler 42 weist eine rotierende Häckslerwelle 43 auf, die in einem Häckslergehäuse 44 gelagert ist. Die Häckslerwelle 43 ist mit beweglichen Messern 45 besetzt, die mit im Häckslergehäuse 44 fest angeordneten Gegenmessern 46 kämmen. Mit diesen Messern 45, 46 wird das Stroh 40 zu Häckselgut zerkleinert und beschleunigt
Der größtenteils aus Spreu 37 bestehende Siebüberlauf 28, der nicht durch das Obersieb 6 hindurch fällt, gelangt über das Obersieb 6 in den hinteren Bereich des Mähdreschers 1 und wird ebenfalls dem Strohhäcksler 42 zugeführt.

Der aus dem Strohhäcksler 42 austretende Gutstrom 47 wird über an späterer Stelle noch näher erläuterte, angetriebene Leitelemente 50 und diesen nachgeordnete, stationäre Leitelemente 51 an zwei Verteilvorrichtungen 54 weiterbefördert, die den Gutstrom 47 auf dem Feld verteilen. Die angetriebenenen Leitelemente 50 sind im dargestellten Ausführungsbeispiel als Fliehkraftförderer 52 und die stationären Leitelemente 51 als Leitschienen 53 ausgeführt. Ebenso ist jedoch denkbar, die angetriebenen Leitelemente 50 als Elevatorförderer auszuführen.

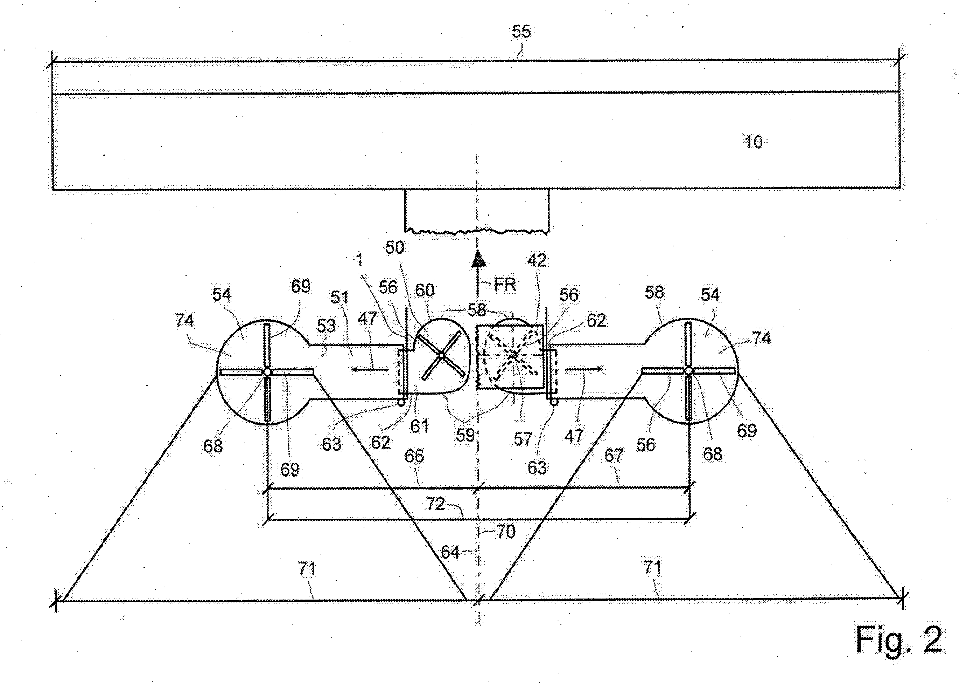

Fig. 2 zeigt die schematische Draufsicht beziehungsweise einen Halbschnitt des hinteren Teils des in Fig.1 dargestellten Mähdreschers 1, Das frontseitige Schneidwerk 10 weist eine Schnittbreite 55 auf, mit der das Erntegut vorn Feld gemäht wird Die beiden Fliehkraftförderer 52 bestehen aus zwei teilweise unterhalb des Strohhäckslers 42, nebeneinander angeordneten Rotoren 56, die in entgegengesetzten Richtungen um parallele Achsen 57 rotieren, Jeder Rotor 56 ist in einem Gehäuse 58 angeordnet, das einen unterseitigen Deckel 59 und eine den Umfang des zugehörigen Rotors 56 umgreifende Wandung 60 aufweist, wobei in der Wandung 60 eine Auslassöffnung 61 vorgesehen ist, an die sich radial ein Austragkanal 62 anschließt. Die Austragkanäle 62 der Gehäuse 58 münden in der zugehörigen Leitschiene 53, wobei jede Leitschiene 53 separat um eine Achse 63 verschwenkbar am hinteren Ende des Maschinengehäuses des Mähdreschers 1 angelenkt ist.
Der aus den Fliehkraftförderern 52 austretende Gutstrom 47 wird anteilig zu den am freien Ende der Leitschienen 53 angeordneten Verteilvorrichtungen 54 gefördert, die erfindungsgemäß dem Strohhäcksler 42 in der Weise zugeordnet sind, dass das aus dem Strohhäcksler 42 austretende Gutstrom 47 vor dem Eintritt in die Verteileinrichtungen 50 eine quer zur Längsachse 64 des Strohhäcksers 42 gerichtete Bewegung erfährt, so dass der Gutstrom 47 auch bei sehr breiten Schneidwerken 10 auf die komplette Schnittbreite 55 verteilt werden kann Die Bewegung des Erntegutstroms 47 quer zur Längsachse 64 des Strohhäckslers 42 wird dabei durch die stationären und angetriebenen Leitelemente 50, 51 bewirkt.

Die Verteileinrichtung 54 ist im dargestellten Ausführungsbeispiel als ein an sich aus der DE 101 33 965 bekannter Radialverteiler 65 ausgeführt. Ebenso ist denkbar die Verteileinrichtung 54 als an sich aus der DE 44 19 421 bekannte Verteilhaube mit Leitblechen auszuführen.

Die als Radialverteiler 65 ausgeführten Verteileinrichtungen 54 sind jeweils in einer Arbeitsposition 74 in Fahrtrichtung FR des Mähdreschers 1 gesehen neben dem Häckselorgan 42 angeordnet. Die horizontalen Abstände 66, 67 der Drehachsen 68 der Rotoren 69 der Radialverteiler 65 zur Mähdrescherlängsachse 70 entsprechen etwa einem Viertel der Schnittbreite 55 des Schneidwerks 10. Die Radialverteiler 65 verteilen den anteiligen Gutstrom 47 jeweils in einer Teilstreubreite 71 auf dem Feld, wobei die Teilstreubreite 71 jedes Radialverteilers 65 annähernd der Hälfte der Schnittbreite 55 des Schneidwerks 10 entspricht und die beiden Teilstreubreiten 71 im Bereich der Mähdrescherlängsachse 70 aneinandergrenzen. Der Abstand 72 zwischen den Drehachsen 68 der Rotoren 69 ist in Abhängigkeit von der Schnittbreite 55 des Schneidwerks 10 einstellbar. Ebenso ist die Anpassung der Teilstreubreiten 71 der Radialverteiler 65 durch die Drehzahländerung der Radialverteiler 65 einzeln einstellbar.

Es ist ebenso denkbar, die Abstände 66, 67 der Drehachsen 68 der Rotoren 69 der Radialverteiler 65 zur Mähdrescherlängsachse 70 und/oder des Abstands 70 zwischen den Drehachsen 68 der Rotoren 69 und/oder die Anpassung der Teilstreubreiten 71 durch die Drehzahländerung der Radialverteiler 65 in Abhängigkeit von der ermittelten Hangneigung zu verstehen.

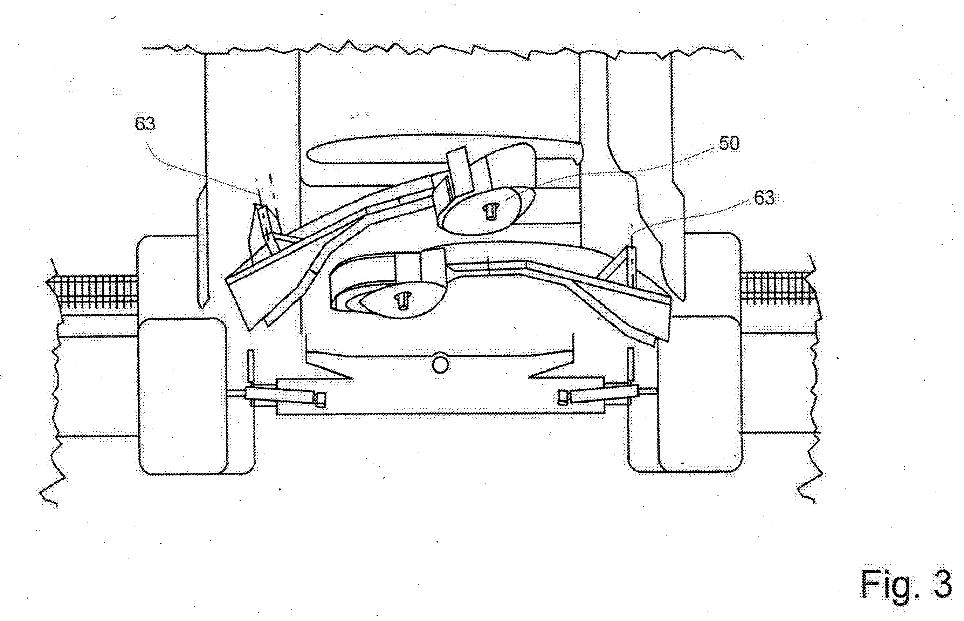

Fig. 3 zeigt die Rückansicht des in Fig.1 dargestellten Mähdreschers 1. Die beiden Leitschienen 53 mit den daran angeordneten Verteilvorrichtungen 54 sind in Fahrtrichtung FR des Mähdreschers 1 betrachtet jeweils in eine Transportposition 72 vor den Strohhäcksler 42 verschwenkt. Die Achsen 60 der Leitschienen 53 sind unterschiedlich geneigt, so dass die Leitschienen 53 und die daran angeordneten Verteilvorrichtungen 54 sich beim Verschwenden aneinander vorbeibewegen und in der Transportposition 72 übereinander angeordnet sind, damit die Gesamtlänge des Mähdreschers 1 kurz gehalten wird.

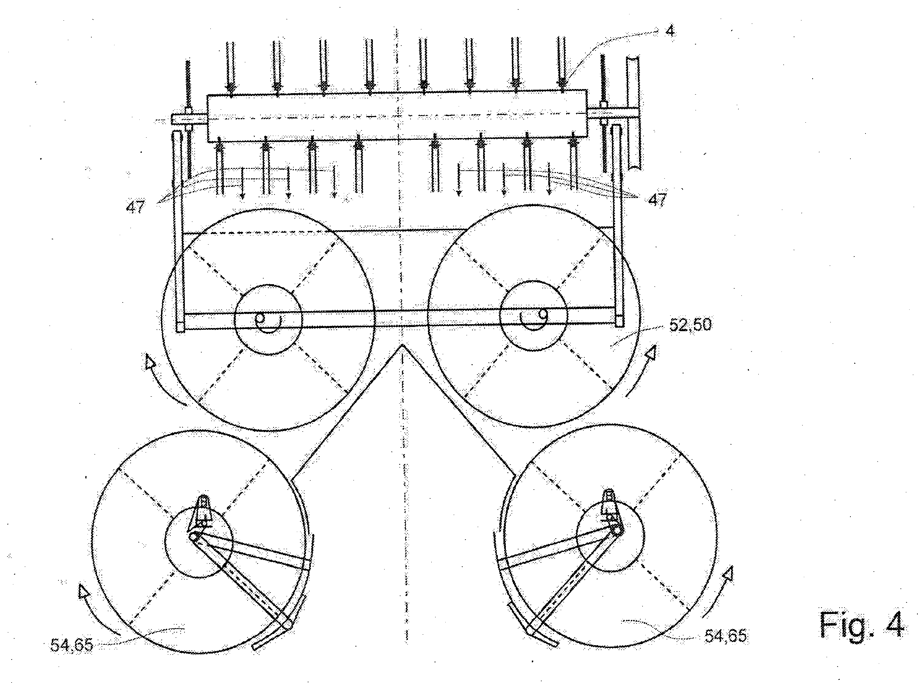

Ebenso ist eine erfindungsgemäße Häcksel- und Verteileinrichtung denkbar, bei der wie in Fig.4 dargestellt, der aus dem Häcksler 42 austretende Gutstrom 47 über die als Fliehkraftförderer 52 ausgeführten angetriebenen Leitelemente 50 direkt in die als Radialverteiler 65 ausgeführten Verteileinrichtungen 54 gefördert wird, wobei der Gutstrom 47 sowohl von dem Fliehkraftförderer 52 als auch von der diesem nachgeordneten Radialverteiler 65 beschleunigt wird.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Dreschwerk
- 3: Hordenschüttler
- 4: Abscheideorgan
- 5: Reinigungseinrichtung
- 6: Sieb
- 7: Sieb
- 8: Reinigungsgebläse
- 9: Erntegut
- 10: Schneidwerk
- 11: Schrägförderer
- 12: Maschinengehäuse
- 13: Korn-Spreu-Gemisch
- 14: Dresch- und Abscheidekorb
- 15: Vorbereitungsboden
- 16: Körner
- 17: Halmteile
- 18: Spreuteile
- 19: Wendetrommel
- 20: Gutstrom
- 21: Sieböffnung
- 22: Rücklaufboden
- 23: Sieböffnung
- 24: Sieböffnung
- 25: Erntegut
- 26: Siebdurchgang
- 27: Überkehrbereich
- 28: Siebüberlauf
- 29: Überkehremtegutmenge
- 30: Auffangboden
- 31: Ährenförderschnecke
- 32: Ährenelevator
- 33: Auffang- und Führungsboden
- 34: Kornförderschnecke
- 35: Kornelevator
- 36: Korntank
- 37: Spreu
- 40: Stroh
- 41: Verlustkörner
- 42: Strohhäcksler
- 43: Häckslerwelle
- 44: Häckslergehäuse
- 45: Messer
- 46: Gegenmesser
- 47: Gutstrom
- 49: Zuführorgane
- 50: angetriebene Leitelemente
- 51: stationäre Leitelemente
- 52: Fliehkraftförderer
- 53: Leitschiene
- 54: Verteilvorrichtung
- 55: Schnittbreite
- 56: Rotor
- 57: Achse
- 58: Gehäuse
- 59: Deckel
- 60: Wandung
- 61: Auslassöffnung
- 62: Austragkanal
- 63: Achse
- 64: Längsachse
- 65: Radialverteiler
- 66: Abstand
- 67: Abstand
- 68: Drehachse
- 69: Rotor
- 70: Mähdrescherlängsachse
- 71: Teilstreubreite
- 72: Abstand
- 73: Transportposition
- 74: Arbeitsposition
- FR: Fahrtrichtung

## Patentansprüche

1. Häcksel- und Verteilvorrichtung, insbesondere Anbauhäcksler für Mähdrescher, wobei dem wenigstens einen Häckselorgan (42) zumindest eine Verteileinrichtung (50) zum Verteilen eines aus dem Häckselorgan (42) austretenden Gutstromes (47) zugeordnet ist,
**dadurch gekennzeichnet,**
**dass** die zumindest eine Verteileinrichtung (54) dem wenigstens einen Häckselorgan (42) in der Weise zugeordnet ist, dass der aus dem Häckselorgan (42) austretende Gutstrom (47) vor dem Eintritt in die zumindest eine Verteileinrichtung (54) eine quer zur Längsachse (64) des Häckselorgans (42) gerichtete Bewegung erfährt und die quer zur Längsachse (64) des Häckselorgans (42) gerichtete Bewegung des Erntegutstromes (47) durch angetriebene Leitelemente (50) bewirkt wird.

2. Häcksel- und Verteilvorrichtung nach Anspruch 1,
**dadurch gekennzeichnet,**
**dass** die quer zur Längsachse (64) des Häckselorgans (42) gerichtete Bewegung des Erntegutstromes (47) zusätzlich durch stationäre Leitelemente (51) bewirkt wird.

3. Häcksel- und Verteilvorrichtung nach Anspruch 1,
**dadurch gekennzeichnet,**
**dass** die angetriebenen Leitelemente (50) Fliehkraftförderer (52) oder Elevatorförderer sind.

4. Häcksel- und Verteilvorrichtung nach Anspruch 2,
**dadurch gekennzeichnet,**
**dass** die statischen Leitelemente (51) als Leitschienen (53) ausgeführt sind.

5. Häcksel- und Verteilvorrichtung nach einem der vorhergehenden Ansprüche,
**dadurch gekennzeichnet,**
**dass** die den stationären und/oder angetriebenen Leitelementen (50, 51) nachgeordneten Verteileinrichtung (54) zwischen sich einen horizontalen Abstand (72) aufweisen und wobei der horizontale Abstand (72) zumindest in Abhängigkeit von der Schnittbreite (55) einstellbar ist.

6. Häcksel- und Verteilvorrichtung nach einem der vorhergehenden Ansprüche,
**dadurch gekennzeichnet,**
**dass** die Verteileinrichtungen (54) als Radialverteiler (65) ausgeführt sind und die Anpassung der Teilstreubreite (71) an die Schnittbreite (55) durch Drehzahländerung der Radialverteiler (65) einstellbar ist.

7. Häcksel- und -verteilvorrichtung nach wenigstens einem der vorhergehenden Ansprüche,
**dadurch gekennzeichnet,**
**dass** die Verteileinrichtung (54) in einer Arbeitsposition (74) in Fahrtrichtung (FR) des Mähdreschers (1) gesehen neben dem Häckselorgan (42) angeordnet ist.

8. Häcksel- und Verteilvorrichtung nach Anspruch 4;
**dadurch gekennzeichnet,**
**dass** die Verteileinrichtung (54) an einer Leitschiene (53) angeordnet ist, wobei die Leitschiene (53) verschwenkbar am Mähdrescher (1) angeordnet ist.

9. Häcksel- und Verteilvorrichtung nach wenigstens einem der vorhergehenden Ansprüche,
**dadurch gekennzeichnet,**
**dass** die Verteileinrichtung (54) in Abhängigkeit von der Hangneigung verstellbar ist.

10. Häcksel- und -verteilvorrichtung nach wenigstens einem der vorhergehenden Ansprüche,
**dadurch gekennzeichnet,**
**dass** der Mähdrescher (1) ein Schneidwerk (10) mit einer Schnittbreite (55) aufweist, wobei die Arbeitsposition (74) des Verteilorgans (54) in Abhängigkeit von der Schnittbreite (55) des Schneidwerks (10) verstellbar ist.

11. Häcksel- und -verteilvorrichtung nach wenigstens einem der vorhergehenden Ansprüche,
**dadurch gekennzeichnet,**
**dass** der aus dem Häckselorgan (42) austretende Gutstrom (47) von den angetriebenen Leitelementen (50) und den diesen nachgeordneden Verteileinrichtungen (54) beschleunigt wird.

## Claims

1. A straw chopping and distributing apparatus, in particular a mounted straw chopper for combine harvesters, wherein associated with the at least one chopping member (42) is at least one distributing device (50) for distributing a flow of material (47) issuing from the chopping member (42),
**characterised in that** the at least one distributing device (54) is associated with the at least one chopping member (42) in such a way that the flow of material (47) issuing from the chopping member (42) before passing into the at least one distributing device (54) experiences a movement directed transversely relative to the longitudinal axis (64) of the chopping member (42) and the movement of the flow of crop material (47) directed transversely relative to the longitudinal axis (64) of the chopping member (42) is implemented by driven guide elements (50).

2. A straw chopping and distributing apparatus according to claim 1 **characterised in that** the movement of the flow of crop material (47) which is directed transversely relative to the longitudinal axis (64) of the chopping member (42) is additionally implemented by stationary guide elements (51).

3. A straw chopping and distributing apparatus according to claim 1 **characterised in that** the driven guide elements (50) are centrifugal force conveyors (52) or elevator conveyors.

4. A straw chopping and distributing apparatus according to claim 2 **characterised in that** the static guide elements (51) are in the form of guide rails (53).

5. A straw chopping and distributing apparatus according to one of the preceding claims **characterised in that** the distributing devices (54) disposed downstream of the stationary and/or driven guide elements (50, 51) have between them a horizontal spacing (72) and wherein the horizontal spacing (72) is adjustable at least in dependence on the cutting width (55).

6. A straw chopping and distributing apparatus according to one of the preceding claims **characterised in that** the distributing devices (54) are in the form of radial distributors (65) and the adaptation of the partial scatter width (71) to the cutting width (55) is adjustable by changing the rotary speed of the radial distributors (65).

7. A straw chopping and distributing apparatus according to at least one of the preceding claims **characterised in that** the distributing device (54) is arranged beside the chopping member (42) in a working position (74) as viewed in the direction of travel (FR) of the combine harvester (1).

8. A straw chopping and distributing apparatus according to claim 4 **characterised in that** the distributing device (54) is arranged on a guide rail (53), the guide rail (53) being arranged pivotably on the combine harvester (1).

9. A straw chopping and distributing apparatus according to at least one of the preceding claims **characterised in that** the distributing device (54) is displaceable in dependence on the slope inclination.

10. A straw chopping and distributing apparatus according to at least one of the preceding claims **characterised in that** the combine harvester (1) has a cutting mechanism (10) with a cutting width (55), wherein the working position (74) of the distributing member (54) is displaceable in dependence on the cutting width (55) of the cutting mechanism (10).

11. A straw chopping and distributing apparatus according to at least one of the preceding claims **characterised in that** the flow of material (47) issuing from the chopping member (42) is accelerated by the driven guide elements (50) and the distributing devices (54) arranged downstream thereof.

## Revendications

1. Dispositif de hachage et d'épandage, en particulier hache-paille porté pour moissonneuse-batteuse, dans lequel au moins un dispositif d'épandage (50) pour épandre un flux de produit de récolte (47) sortant de l'organe de hachage (42) est associé à l'organe de hachage (42) au nombre d'au moins un, **caractérisé en ce que** ledit au moins un dispositif d'épandage (54) est associé audit au moins un organe de hachage (42) de façon que le flux de produit de récolte (47) sortant de l'organe de hachage (42) subisse avant l'entrée dans ledit au moins un dispositif d'épandage (54) un mouvement dirigé transversalement à l'axe longitudinal (64) de l'organe de hachage (42), et le mouvement du flux de produit de récolte (47) dirigé transversalement à l'axe longitudinal (64) de l'organe de hachage (42) est produit par des éléments de guidage entraînés (50).

2. Dispositif de hachage et d'épandage selon la revendication 1, **caractérisé en ce que** le mouvement du flux de produit de récolte (47) dirigé transversalement à l'axe longitudinal (64) de l'organe de hachage (42) est produit, en plus, par des éléments de guidage stationnaires (51).

3. Dispositif de hachage et d'épandage selon la revendication 1, **caractérisé en ce que** les éléments de guidage entraînés (50) sont des convoyeurs centrifuges (52) ou des convoyeurs élévateurs.

4. Dispositif de hachage et d'épandage selon la revendication 2, **caractérisé en ce que** les éléments de guidage statiques (51) sont réalisés sous la forme de rails de guidage (53).

5. Dispositif de hachage et d'épandage selon l'une des revendications précédentes, **caractérisé en ce que** les dispositifs d'épandage (54) disposés à la suite des éléments de guidage stationnaires et/ou entraînés (50, 51) présentent entre eux une distance horizontale (72), la distance horizontale (72) étant réglable au moins en fonction de la largeur de coupe (55).

6. Dispositif de hachage et d'épandage selon l'une des revendications précédentes, **caractérisé en ce que** les dispositifs d'épandage (54) sont réalisés sous la forme d'épandeurs radiaux (65), et l'adaptation de la largeur d'épandage partielle (71) à la largeur de coupe (55) est réglable par modification de la vitesse de rotation des épandeurs radiaux (65).

7. Dispositif de hachage et d'épandage selon au moins l'une des revendications précédentes, **caractérisé en ce que**, dans une position de travail (74), le dispositif d'épandage (54) est disposé, par rapport au sens de marche (FR) de la moissonneuse-batteuse (1), à côté de l'organe de hachage (42).

8. Dispositif de hachage et d'épandage selon la revendication 4, **caractérisé en ce que** le dispositif d'épandage (54) est disposé sur un rail de guidage (53), le rail de guidage (53) étant disposé pivotant sur la moissonneuse-batteuse (1).

9. Dispositif de hachage et d'épandage selon au moins l'une des revendications précédentes, **caractérisé en ce que** le dispositif d'épandage (54) est réglable en fonction du dévers.

10. Dispositif de hachage et d'épandage selon au moins l'une des revendications précédentes, **caractérisé en ce que** la moissonneuse-batteuse (1) présente un tablier de coupe (10) avec une largeur de coupe (55), la position de travail (74) de l'organe d'épandage (54) étant réglable en fonction de la largeur de coupe (55) du tablier de coupe (10).

11. Dispositif de hachage et d'épandage selon au moins l'une des revendications précédentes, **caractérisé en ce que** le flux de produit de récolte (47) sortant de l'organe de hachage (42) est accéléré par les éléments de guidage entraînés (50) et les dispositifs d'épandage (54) disposés à la suite de ceux-ci.
